# EUROPEAN PATENT SPECIFICATION

(11) **EP 0 517 366 B1**
(45) Date of publication and mention of the grant of the patent: **03.04.1996**
(21) Application number: 92303935.8
(22) Date of filing: 30.04.1992
(51) Int. Cl.: G01N 27/407, G01N 27/12

(54) **Method and apparatus for sensing oxides of Nitrogen**
Verfahren und Vorrichtung zur Bestimmung von Stickstoffoxiden
Méthode et dispositif pour détecter des oxydes d'azote

(30) Priority: 07.06.1991 US 712306
(43) Date of publication of application: 09.12.1992
(73) Proprietor: FORD MOTOR COMPANY LIMITED, Brentwood, Essex CM13 3BW (GB); FORD FRANCE S. A., F-92506 Rueil-Malmaison Cédex (FR); FORD-WERKE AKTIENGESELLSCHAFT, D-50725 Köln (DE); FORD MOTOR COMPANY, Dearborn, MI 48164 (US)
(72) Inventor: Logothetis, Eleftherios M., Birmingham, Michigan 48009 (US); Soltis, Richard E., Redford, Michigan 48239 (US)
(74) Representative: Messulam, Alec Moses

(56) References cited:
- EP-A- 0 331 050
- US-A- 4 770 760
- US-A- 4 840 913

## Description

This invention relates to sensing the concentration of oxides of nitrogen in a gas, e.g., the exhaust gas from an internal combustion engine operating over a wide range of A/F mixtures.

Various semiconductor gas sensors such as those based on SnO₂ have been developed which exhibit sensitivity to oxides of nitrogen but, at the same time, also respond to a variety of other gas molecules such as carbon monoxide, hydrogen, hydrocarbons (HC), etc. This lack of selectivity is particularly disadvantageous if it is desired to use the sensor for internal combustion engine control applications. That is, it is difficult to sense oxides of nitrogen in the engine exhaust gas because carbon monoxide, hydrogen, hydrocarbons and other reducing species are always present in the exhaust gas and usually in greater concentrations than that of the oxides of nitrogen.
In U.S. Patent 4,052,268 issued to Blurton et al., oxides of nitrogen are measured with a liquid electrolyte cell. Part of the incoming gas is drawn through the liquid and the NO (or NOₓ) is oxidised at a constant anode potential (1.5 to 1.9 volts). The current through the cell provides a measure of the concentration of the oxides of nitrogen. With the specific conditions of the operation and structure of this liquid electrolyte cell, CO and HC do not give rise to an electric current through the cell. Liquid electrolyte cells of the type described by Blurton et al., however, are not suitable for internal combustion engine applications because of the conditions prevailing in an automobile such as high temperatures and vibrations. In U.S. Patent 4,770,760 issued to Noda et al., the concentration of oxides of nitrogen in the exhaust gas from an internal combustion engine are measured using two oxygen sensors. These sensors comprise solid state electrochemical cells operating as oxygen pumps. The first oxygen sensor measures the concentration of oxygen in the gas by applying a current through a ZrO₂ solid state electrochemical cell to pump oxygen out of a restricted volume which is in communication with the gas; the magnitude of the current is proportional to the oxygen concentration. The second oxygen sensor operates similarly, but this sensor has a special catalytic electrode that can dissociate oxides of nitrogen into nitrogen and oxygen in addition to pumping oxygen out of its own restricted volume (which is also in communication with the measurement gas). A subtraction of the two currents from the two oxygen sensors provides a measure of the concentration of the oxides of nitrogen. In the exhaust gas from an internal combustion engine, the concentration of the oxides of nitrogen can be much smaller than that of oxygen. Thus, attempting to use a Noda et al type of sensor would be less than desirable due to the inherent inaccuracy of determining the concentration of the oxides of nitrogen by subtracting two almost equal, large numbers.
U.S. Patent 4,840,913 discloses a sensor useful in automotive applications for measuring oxides of nitrogen in the presence of interfering reducing species such as hydrocarbons (HC) and carbon monoxide (CO). The measurement gas such as the exhaust gas from an engine is first passed though an oxidation catalyst which oxidises and removes the reducing species. The output gas from the oxidation catalyst is received by a non-selective solid state sensor (i.e. a sensor that responds to oxides of nitrogen and reducing gases) which generates an output signal that corresponds only to oxides of nitrogen. Proper operation of the device requires the presence of oxygen in the measurement gas. In engine control applications, this limits the usefulness of the device to the cases where oxygen exists. When an automobile engine is operated with lean air-to-fuel mixtures, the exhaust gas always contains excess oxygen, its concentration increasing with an increasing air-to-fuel ratio. On the other hand, when the engine is operated with fuel rich air-to-fuel mixtures, the amount of oxygen in the exhaust gas is very small or essentially non-existent.
Consequently, as disclosed in that patent, this type of sensor can be used in connection with engine control strategies which provide for excess oxygen in the exhaust gas, such as lean air fuel mixtures, or the use of secondary air injected into the exhaust gas. However, it is desirable to have a sensor for measuring nitrogen oxide in the exhaust gas of an engine operating with fuel rich mixtures, where oxygen for the sensor does not need to be provided from the ambient air. That is, it would be desirable if the sensor could operate effectively only using the exhaust gas. It would also be desirable to have a sensor of this type which could, if using ambient air, control precisely the amount of oxygen being added. The limitations of the above mentioned devices are some of the problems that this invention overcomes.

This invention is directed to a method of sensing oxides of nitrogen in a measurement gas also including reducing gases. It includes positioning an oxidisation catalyst dispersed in a supporting matrix between the measurement gas and an oxides of nitrogen semiconductor sensor and isolating the oxides of nitrogen semiconductor sensor from the measurement gas. It further includes providing oxygen by means of a solid state electrochemical oxygen pumping cell for diffusion into the matrix comprising the oxidation catalyst. Another step of the method involves exposing the matrix comprising the oxidisation catalyst to the measurement gas and oxygen and then passing the measurement gas through the oxidisation catalyst which oxidises the reducing gases without affecting any NO₂ present. Then the gaseous output from the oxidation catalyst is passed to the oxides of nitrogen semiconductor sensor to detect the amount of oxides of nitrogen by sensing the change in resistance of the sensor.

According to another embodiment of this invention, it is directed to an apparatus for sensing oxides of nitrogen in a measurement gas also including reducing gases. The apparatus comprises a solid state electrochemical oxygen pumping cell capable of providing oxygen and comprising an electrode layer on each of two opposite side of an oxygen-ion conducting solid electrolyte member. It further comprises an oxidation catalyst means, dispersed in a porous matrix and located adjacent the solid state electrochemical oxygen pumping cell, for accepting the measurement gas and the oxygen and then oxidising any reducing species present in the measurement gas without affecting any NO₂ present. A semiconductor sensor means is located adjacent the oxidation catalyst means and is shielded from the measurement gas so as to be exposed substantially only to an oxidised gas passing out of the oxidation catalyst means but substantially isolated from the reducing species in the measurement gas and generating an output signal responsive to oxides of nitrogen in the oxidised gas so that the output is a function of oxides of nitrogen. A heater may be included with the apparatus for heating the apparatus.

The invention will now be described further, by way of example, with reference to the accompanying drawings, in which :

FIG. 1 is a schematic of an apparatus according to a first embodiment of this invention.

FIG. 2 is a schematic of a second embodiment of this invention configured as an integrated film apparatus.

FIG. 3 is a schematic of a third embodiment of this invention made by laminating ceramic plates to form a planar apparatus.

FIG. 4 is an exploded perspective view of the apparatus of FIG.3 showing the structure of each ceramic plate.

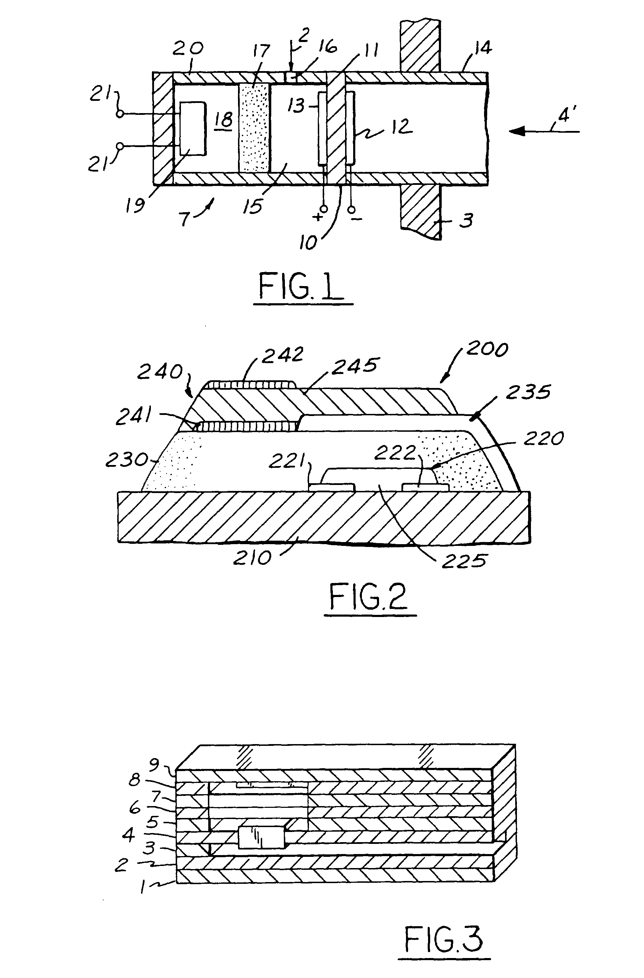

Referring to FIG. 1, an apparatus 1 according to one of the embodiments of the present invention is shown to be inserted into a measurement gas 2 through a wall 3 which is one of the walls separating the measurement gas from the ambient air 4. The measurement gas 2 typically contains oxides of nitrogen together with reducing gases such as CO and HC and inert gases such as nitrogen (N₂). The measurement gas may also contain oxygen. In particular, the measurement gas is the exhaust gas from an engine which contains varying amounts of N₂, CO₂, H₂O, CO, H₂, NOₓ, and various hydrocarbons as the main gas constituents. Apparatus 7 includes an oxidation catalyst means 17 and a nonselective oxides of nitrogen sensor 19 positioned inside restricted volume 18. Oxidation catalyst means 17 has a porous microstructure as to be permeable to gases and is made, for example, of a matrix material such as alumina or spinal impregnated with an oxidation catalytic material such as, for example, platinum or palladium. Nonselective oxides of nitrogen sensor 19 is one of several well known nonselective oxides of nitrogen sensors, for example, a resistive-type SnO₂ sensor or a SAW (surface acoustic wave) based sensor. Nonselective oxides of nitrogen sensor 19 is provided with leads 21 which transmit the signal information from sensor 19 to the operator of apparatus 7. Oxidation catalyst 17, restricted volume 18, and nonselective oxides of nitrogen sensor 19 are contained within a structure 20 having an aperture 16 for permitting a portion of the measurement gas to enter apparatus 7. The configuration of sensor 19 within structure 20 and oxidation catalyst means 17 is such that sensor 19 is isolated from measurement gas 2 outside said structure.

Apparatus 7 also includes a solid state electrochemical cell 10 attached to the structure 20 and to a housing 14 which serves as a means for mounting apparatus 1 to the wall 3. Electrochemical cell 10 consists of a piece of an oxygen-ion conducting solid electrolyte 11 such as ZrO₂ containing yttria and two electrodes 12 and 13, one on each side of the solid electrolyte 11. Electrodes 12 and 13 are made according to the well-established art of solid electrolyte oxygen sensors used, for example, extensively for air-to-fuel control of internal combustion engines. For example, electrodes 12 and 13 may be porous platinum layers deposited by thick film techniques. According to this embodiment, electrode 12 is exposed to the ambient air whereas electrode 13 is exposed to volume 15 of apparatus 1 which is adjacent to aperture 16. Housing 14 and structure 20 may be made from inert materials such as alumina or from the same material as the solid electrochemical cell (e.g. ZrO₂). Apparatus 7 is provided with heater to maintain the various elements of apparatus 7 at appropriate temperatures, preferably above about 200/C, more preferably in the range of about 200/C to 800/C, which may be the same for all elements. For example, when the oxidation catalyst 17 is made of platinum and the nonselective oxides of nitrogen sensor is a SnO₂-based sensor, a temperature in the range 300 to 400/C is desirable. Depending on the type of the material and the dimensions of the electrolyte 11, the above range of temperatures may also be sufficient for proper operation of cell 10.

In operation, portion of the measurement gas enters volume 15 of apparatus 7 through aperture 16. An external voltage V, typically in the range 0.5 to 1.0 volts, is applied across electrochemical cell 10 so that electrode 12 is negative and electrode 13 is positive. The applied voltage V causes an electrical current I to pass through cell 10 and oxygen to be transferred (pumped) from the ambient air 4 into volume 15. The rate of oxygen transfer F is proportional to the current I. The measurement gas entering apparatus 1 through aperture 16 is allowed to mix in volume 15 with the oxygen pumped into volume 15 by electrochemical cell 10. The gas mixture enters oxidation catalyst 17 where CO, H₂, and the hydrocarbons are oxidised completely to CO₂ and H₂O when sufficient oxygen is pumped by cell 10. NO₂ however remains unaffected and NO present in the mixture may be converted to NO₂ or remain as NO. Consequently, the gas leaving catalyst 17 and entering restricted volume 18 contains NO₂ and may contain NO as an "active" component. It is these oxides of nitrogen, NO₂ and NO, which are sensed by the nonselective oxides of nitrogen sensor 19. The signal output of sensor 19 thus provides a direct measure of the concentration of the oxides of nitrogen in the measurement gas, in spite of the interfering reducing gases present in measurement gas 2 prior to its passing through the oxidation catalyst.

Advantageously this invention apparatus when used in exhaust gas applications can operate without access to ambient air. The autoexhaust contains large amounts of CO₂ and H₂O which can act as sources of oxygen. In this case, the apparatus of the present invention is completely immersed in the measurement gas (autoexhaust), by eliminating the access of ambient air through housing 14. The housing may be modified to provide access for mounting the apparatus within the exhaust system. By applying a voltage V in excess of 1.2 volts with the proper polarity across cell 10, oxygen is pumped into volume 15 by electrodissociation at electrode 12 of CO₂ and H₂O molecules from the exhaust gas adjacent to electrode 12.

Various modifications of the structure of apparatus 7 and refinements of the operation of apparatus 7 are possible. For example, structure 20 may have an optional rear opening (not shown in the FIG.) e.g., in the wall to the left of the sensor 19, which permits the gas to pass through the apparatus. In the embodiment of FIG. 1 where the portion of the measurement gas enters the apparatus by diffusion through aperture 16, a rear opening is not needed. If the apparatus is heated and placed in a position so that the rear part (the left end of apparatus 1 as viewed in FIG. 1) of the apparatus is at a higher temperature than the front part, then the gas is driven by convection through apparatus 10 from the (front opening) aperture 16 to the rear opening provided that a rear opening exists. In operation this gaseous flow would essentially prevent measurement gas from entering any rear opening. If structure 20 of apparatus 7 forms a section of the gas flow vessel so that all the measurement gas flows through aperture 16, then the rear opening is needed in order to allow the gas to pass.

As still another embodiment of the apparatus of the present invention, the apparatus may be modified so that the concentration of oxygen provided by electrochemical oxygen pumping cell 10 is maintained at a constant value. For some situations it is desirable to provide the oxygen in an amount in excess of that required to oxidise all oxidisable molecules inside the oxidation catalyst means 17. For these situations, the apparatus of FIG. 1 is adequate. On the other hand, keeping the oxygen at a prescribed constant concentration may be especially desirable in some other cases in order to optimise the efficiency of the oxidation catalyst 17 or to optimise the operation of the nonselective oxides of nitrogen sensor 19. This desired modification of the present apparatus may be accomplished by adding another electrochemical cell, e.g., another ZrO₂ cell, here operating as a sensing cell, having one electrode facing restricted volume 18 and the other facing the ambient air as a reference. According to the well known prior art of solid state oxygen sensing cells, the open circuit voltage (emf) developed across this sensing cell, because of the difference in the oxygen partial pressure at the two electrodes of the cell, provides a measure of the concentration of oxygen inside restricted volume 18. During operation of such a modified apparatus, the pumping current through cell 10 is adjusted to keep the emf of the sensing cell at a constant value. This assures that the oxygen is maintained at a constant concentration inside restricted volume 18 and in a particular excess amount if desired.

FIG. 2 shows a second embodiment of the present invention. The apparatus 200 shown in this figure is an integrated film-type version of the apparatus of FIG. 1 and includes a nonselective oxides of nitrogen sensor 220, an oxidation catalyst means 230 and an electrochemical oxygen pumping cell 240. A substrate 210 acts as a support for apparatus 200 and is typically made of a material such as aluminium oxide. Two metal film electrodes 221 and 222 made, for example, from gold or platinum, are deposited on substrate 210 and a metal oxide film 225 of, e.g., SnO₂ or ZnO is deposited on top the electrodes to form the nonselective oxides of nitrogen sensor 220. Porous oxidation catalyst means 230 is deposited directly on sensor 220 and part of substrate 210. The oxidation catalyst means is made of a porous matrix material such as alumina or spinal and is impregnated with an oxidation catalytic material as, for example, platinum or palladium. The part of the oxidation catalyst means 230 that is over sensor 220 is covered with a gas impermeable film 235 made from inert materials such as glass, alumina, or quartz. A porous electrode 241 made, e.g., of platinum, is deposited on top of the exposed part of the oxidation catalyst means 230. A dense solid electrolyte (e.g. Y-doped ZrO₂) layer 245 is deposited on top of electrode 241 (and inert layer 235). Finally a second porous electrode 242 made, e.g., of platinum, is deposited on top of solid electrolyte layer 245. Solid electrolyte layer 245 and platinum electrodes 241 and 242 form an electrochemical oxygen pumping cell 240.

In operation, a voltage with proper polarity applied across electrochemical cell 240 transfers oxygen into the oxidation catalyst means 230 from oxygen which may be present in the exhaust gas or from dissociation of CO₂ and H₂O present in the exhaust gas. This oxygen transferred into oxidation catalyst means 230 reacts with and removes the reducing species contained in the measurement gas which diffuses into oxidation catalyst means 230 through the exposed portion of oxidation catalyst means 230. The NO₂ remaining in the oxidised measurement gas is then detected by sensor 220.

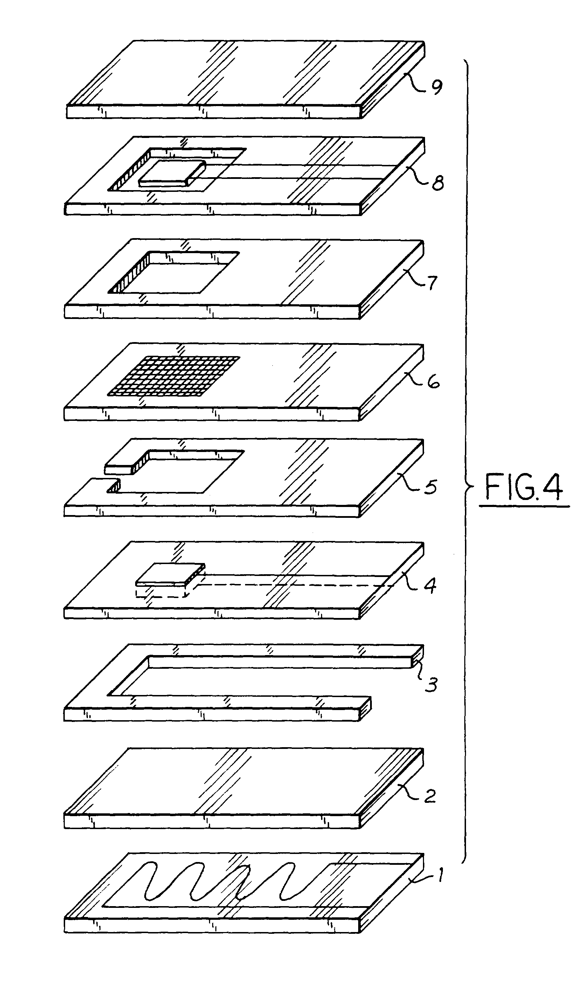

FIG.3 shows a third embodiment of the present invention in the form of a planar apparatus made by laminating and co-firing ceramic sheets. FIG. 4 is an exploded perspective view of the apparatus of FIG. 3 showing the various ceramic sheets. Ceramic Sheet 4 is made from an oxygen-ion conducting solid electrolyte such as Yttrium-doped ZrO₂. The other sheets can be made also from ZrO₂ or from other inert structural ceramic materials such as alumina. Sheet 1 includes a heater which is, for example, screen-printed on sheet 1. Sheet 2 is a solid plate whereas sheet 3 is in the form of a U-shaped spacer. Sheet 3 could be reversed so that its opening is on the same end of the apparatus as the aperture of sheet 5 if, for example, the apparatus will provide oxygen from the exhaust gas by dissociating H₂O and CO₂. Sheet 4 made, e.g., from Y-doped ZrO₂ has printed porous (e.g., platinum) electrodes, one on each side, to form an electrochemical oxygen pumping cell. Sheets 2, 3 and 4 form a structure which is connected to the ambient air. Sheet 5 serves as a spacer and contains a hole which defines a volume and an aperture which provides communication with the measurement gas outside the apparatus. Sheet 6 has a hole which is filled with a porous material, e.g. alumina, impregnated with an oxidation catalytic material such as Pt or Pd. Sheet 7 is another spacer to partially define a restricted volume. Sheet 8 further defines the restricted volume in which a nonselective oxides of nitrogen sensor such as SnO₂ is mounted. Finally Sheet 9 is a solid plate which seals the upper part of the restricted volume from the measurement gas. Alternatively, Sheet 8 may be a solid plate with a film-type SnO₂ sensor deposited on the side of sheet 8 facing sheet 7, in which case sheet 9 is not necessary. Optionally, a second heater similar to sheet 1 may be laminated on top of sheet 9.

## Claims

1. A method of sensing oxides of nitrogen in a measurement gas also containing reducing gases including the steps of:
positioning an oxidisation catalyst (17) dispersed in a supporting matrix between said measurement gas and an oxides of nitrogen semiconductor sensor (19);
isolating said oxides of nitrogen semiconductor sensor (19) from the measurement gas;
providing oxygen for diffusion into the matrix comprising the oxidation catalyst (17) by means of a solid state electrochemical oxygen pumping cell (10),
exposing the oxidation catalyst (17) to the measurement gas and the oxygen;
passing the measurement gas through the oxidisation catalyst (17) which oxidises the reducing gases without affecting any NO₂ present; and
passing the gaseous output from the oxidation catalyst (17) to the oxides of nitrogen semiconductor sensor (19) to detect the amount of oxides of nitrogen by sensing the change in resistance of the sensor.

2. A method according to claim 1, further comprising the step of heating the oxidisation catalyst to a temperature in excess of about 200/C.

3. A method according to claim 2 wherein the measurement gas is the exhaust gas of an internal combustion engine and oxygen is generated by the dissociation of carbon dioxide and water in the exhaust gas.

4. A method according to claim 1 further comprising the step of providing an ambient air atmosphere in contact with an electrode of the solid state electrochemical oxygen pumping cell.

5. An apparatus for sensing oxides of nitrogen in a measurement gas also containing reducing gases comprising:
a solid state electrochemical oxygen pumping cell (10) capable of providing oxygen comprising an electrode layer (12,13) on each of two opposite side of an oxygen-ion conducting solid electrolyte member (11);
an oxidation catalyst means (17), dispersed in a porous matrix and located adjacent the solid state electrochemical oxygen pumping cell (10), for accepting and passing the measurement gas and the oxygen and oxidising any reducing species present in the measurement gas without affecting any NO₂ present;
a semiconductor sensor means (19) located adjacent the oxidation catalyst means (17) and shielded from the measurement gas so as to be exposed to an oxidised gas passed by the oxidation catalyst means (17) and generating an output signal responsive to oxides of nitrogen in the oxidised gas so that the sensor means is substantially isolated from the reducing species in the measurement gas and the output is a function of oxides of nitrogen.

6. An apparatus according to claim 5, wherein the matrix is an inert ceramic with metal oxidation catalyst particles deposited on walls of pores of the ceramic.

7. An apparatus according to claim 6, wherein the metal oxidation catalyst particles are selected from the group consisting of palladium and platinum.

8. An apparatus according to claim 5, wherein the semiconductor sensor means is fabricated from SnO₂ and ZnO.

9. An apparatus according to claim 5, wherein the electrolyte is ZrO₂.

10. An apparatus according to claim 5, wherein the solid state electrochemical oxygen pumping cell, the oxidation catalyst means and the sensor means are formed as one integrated structure, in that order.

## Patentansprüche

1. Ein Verfahren zur Detektion von Stickstoffoxiden in einem Meßgas, das ebenso reduzierende Gase enthält, umfassend die Schritte:
Des Ausrichtens eines Oxidationskatalysators (17), der in einer Trägermatrix verteilt ist, zwischen diesem Meßgas und einem Halbleitersensor für Stickoxide (19);
des Isolierens dieses Halbleitersensors für Stickoxide (19) vom Meßgas;
des Bereitstellens von Sauerstoff zur Diffusion in die den Oxidationskatalysator (17) umfassende Matrix mit Hilfe einer sauerstoffpumpenden Feststoffelektrolysezelle (10);
des Aussetzens des Oxidationskatalysators (17) dem Meßgas und dem Sauerstoff; des Leitens des Meßgases durch den Oxidationskatalysator (17), der die reduzierenden Gase oxidiert, ohne das vorhandene NO₂ zu beeinflussen; und
des Leitens des gasförmigen Ausstoßes des Oxidationskatalysators (17) zum Halbleitersensor für Stickoxide (19), um über die Erfassung der Veränderung des Sensorwiderstandes die Stickoxidmenge zu messen.

2. Ein Verfahren nach Anspruch 1, das außerdem den Schritt des Aufheizens des Oxidationskatalysators auf eine Temperatur von mehr als etwa 200°C umfaßt.

3. Ein Verfahren nach Anspruch 2, worin das Meßgas das Abgas eines Verbrennungsmotors ist und der Sauerstoff durch die Dissoziation von Kohlendioxid und Wasser im Abgas erzeugt wird.

4. Ein Verfahren nach Anspruch 1, das außerdem den Schritt des Bereitstellens einer Frischluftatmosphäre im Kontakt mit einer Elektrode der sauerstoffpumpenden Feststoffelektrolysezelle umfaßt.

5. Ein Gerät zur Detektion von Stickoxiden in einem Meßgas, das auch reduzierende Gase enthält, umfassend:
Eine sauerstoffpumpende Feststoffelektrolysezelle (10), die zur Bereitstellung von Sauerstoff in der Lage ist und je eine Elektrodenschicht (12, 13) auf jeder der beiden gegenüberliegenden Seiten eines Sauerstoffionen leitenden Festkörperelektrolytbauteiles (11) umfaßt;
eine Vorrichtung (17) mit einem Oxidationskatalysator, der in einer porösen Matrix dispergiert ist, die an der sauerstoffpumpenden Feststoffelektrolysezelle (10) angrenzt und dazu dient, das Meßgas und den Sauerstoff aufzunehmen und weiterzuleiten und jegliche im Meßgas vorhandene reduzierende Spezies zu oxidieren, ohne vorhandenes NO₂ zu beeinflussen;
einen Halbleitersensor (19), der an die Vorrichtung zur Oxidationskatalyse (17) angrenzt und vom Meßgas abgeschirmt ist, so daß er einem von der Vorrichtung zur Oxidationskatalyse (17) weitergeleiteten oxidierten Gas ausgesetzt ist und ein Ausgabesignal erzeugt, das auf die Stickoxide im oxidierten Gas anspricht, so daß der Sensor im wesentlichen von den reduzierenden Spezies abgeschirmt ist und das Ausgabesignal eine Funktion der Stickoxide darstellt.

6. Ein Gerät nach Anspruch 5, worin die Matrix aus inerter Keramik mit Partikeln aus einem metallischen Oxidationskatalysator besteht, die auf den Wänden der Poren der Keramik abgeschieden sind.

7. Ein Gerät nach Anspruch 6, worin die Partikel aus einem metallischen Oxidationskatalysator aus der Gruppe ausgewählt sind, die aus Palladium und Platin besteht.

8. Ein Gerät nach Anspruch 5, worin der Halbleitersensor aus SnO₂ und ZnO hergestellt wird.

9. Ein Gerät nach Anspruch 5, worin der Elektrolyt ZrO₂ ist.

10. Ein Gerät nach Anspruch 5, worin die sauerstoffpumpende Feststoffelektrolysezelle, die Vorrichtung zur Oxidationskatalyse und der Sensor, in dieser Reihenfolge, eine integrierte Struktur bilden.

## Revendications

1. Une méthode pour capter les oxydes d'azote contenus à l'intérieur d'un gaz faisant l'objet d'une mesure, lequel contient également des gaz réducteurs, comprenant les étapes suivantes :
la mise en place d'un catalyseur d'oxydation (17) dispersé à l'intérieur d'une matrice de support placée entre ledit gaz faisant l'objet de la mesure et un capteur d'oxydes d'azote semi-conducteur (19);
l'isolation dudit capteur d'oxydes d'azote semi-conducteur (19) en partant du gaz faisant l'objet de la mesure;
un apport d'oxygène que l'on fait diffuser à l'intérieur de la matrice qui contient le catalyseur d'oxydation (17) en utilisant une cellule électrochimique solide de pompage d'oxygène (10),
l'exposition du catalyseur d'oxydation (17) à l'action des gaz qui sont l'objet de la mesure ainsi qu'à celle de l'oxygène;
le passage du gaz faisant l'objet de la mesure à travers le catalyseur d'oxydation (17), lequel oxyde les gaz réducteurs sans affecter le NO₂ présent; et
le passage de l'effluent gazeux qui provient du catalyseur d'oxydation (17) vers le capteur semi-conducteur d'oxydes d'azote (19) pour permettre la détection de la quantité d'oxydes d'azote grâce à la mesure de la modification de la résistance du capteur.

2. Une méthode selon la revendication 1, comprenant en outre l'étape qui consiste à chauffer le catalyseur d'oxydation à une température supérieure à environ 200 °C.

3. Une méthode selon la revendication 2, dans laquelle le gaz qui fait l'objet de la mesure est constitué par les gaz d'échappement provenant d'un moteur à combustion interne et dans laquelle l'oxygène est généré par la dissociation du dioxyde de carbone et de l'eau contenus à l'intérieur des gaz d'échappement.

4. Une méthode selon la revendication 1, comprenant en outre les étapes qui consistent à fournir une atmosphère constituée d'air ambiant que l'on met au contact d'une électrode qui fait partie de la cellule électrochimique solide de pompage d'oxygène.

5. Un appareil pour capter les oxydes d'azote contenus à l'intérieur d'un gaz faisant l'objet de mesures et qui contient également des gaz réducteurs comprenant :
une cellule électrochimique solide de pompage d'oxygène (10) capable de fournir de l'oxygène, comprenant une électrode laminaire (12, 13) déposée sur chacun des deux côtés opposés d'un élément d'électrolyte solide (11) conducteur d'ions oxygène;
un dispositif à catalyseur d'oxydation (17), dispersé à l'intérieur d'une matrice poreuse et placé en position adjacente par rapport à la cellule électrochimique solide de pompage d'oxygène (10), permettant l'introduction et le passage du gaz qui fait l'objet de la mesure ainsi que de l'oxygène et de façon à oxyder toutes les espèces réductrices qui seraient présentes au sein du gaz qui fait l'objet de la mesure, sans affecter les molécules de NO₂ présentes;
un dispositif de capteurs à semi-conducteurs (19) placés à côté du dispositif catalyseur d'oxydation (17) et protégé de l'action du gaz faisant l'objet de la mesure, de façon à ce qu'il soit exposé à un gaz oxydé ayant traversé le dispositif catalyseur d'oxydation (17) et générant un signal de sortie sensible aux oxydes d'azote qui sont présents au sein des gaz oxydés, de telle sorte que le dispositif de capteurs soit pratiquement isolé des espèces réductrices présentes au sein des gaz de mesure et de telle sorte que le signal de sortie soit fonction de la quantité d'oxydes d'azote.

6. Un appareil selon la revendication 5, dans lequel la matrice est constituée d'une céramique inerte dans laquelle des particules métalliques de catalyseur d'oxydation ont été déposées sur les parois des pores de la céramique.

7. Un appareil selon la revendication 6, dans lequel les particules métalliques de catalyseur d'oxydation ont été choisis dans le groupe qui comprend le palladium et le platine.

8. Un appareil selon la revendication 5, dans lequel le dispositif de capteurs semi-conducteurs est constitué de SnO₂ et de ZnO.

9. Un appareil selon la revendication 5, dans lequel l'électrolyte est constitué par du ZrO₂.

10. Un appareil selon la revendication 5, dans lequel la cellule électrochimique solide de pompage d'oxygène, le dispositif de catalyseur d'oxydation et le dispositif de capteurs se présentent dans cet ordre sous la forme d'une structure intégrée.
